Europäisches Patentamt

(19) **European Patent Office**

**Office européen des brevets**

(11) Numéro de publication: **0 046 709**
**B1**

(12) **FASCICULE DE BREVET EUROPEEN**

(45) Date de publication du fascicule du brevet: **20.06.84**

(51) Int. Cl.³: **A 01 C 7/04**

(21) Numéro de dépôt: **81401326.4**

(22) Date de dépôt: **20.08.81**

(54) Distributeur de semoir monograine à dépression.

(30) Priorité: **21.08.80 FR 8018291**

(43) Date de publication de la demande:
**03.03.82 Bulletin 82/9**

(45) Mention de la délivrance du brevet:
**20.06.84 Bulletin 84/25**

(84) Etats contractants désignés:
**DE FR GB IT NL**

(56) Documents cités:
**DE - A - 2 701 982**
**FR - A - 1 410 390**
**FR - A - 2 174 341**
**FR - A - 2 249 521**

(73) Titulaire: **NODET-GOUGIS**
**5 Boulevard du Général-Leclerc B.P. 36**
**F-77130 Montereau (FR)**

(72) Inventeur: **Maury, Jean-Pierre**
**10, rue Pierre Corneille**
**F-77130 Montereau (FR)**

(74) Mandataire: **Phélip, Bruno et al,**
**c/o Cabinet Harlé & Phélip 21, rue de la**
**Rochefoucauld**
**F-75009 Paris (FR)**

Courier Press, Leamington Spa, England.

## Description

La présente invention concerne un distributeur de semoir monograine à dépression.

L'invention s'applique plus particulièrement aux distributeurs à disque des semoirs pneumatiques.

Le problème essentiel à résoudre sur ce type de semoir est un problème de sélection des graines par le distributeur de l'appareil dont le disque perforé ne doit transporter qu'une seule graine par trou. La solution de ce problème se situe à la fois au niveau de la préhension des graines par les trous d'aspiration du disque du distributeur et également au niveau de l'organe d'élimination des graines doubles, dénommé ci-après sélecteur, dont les semoirs modernes sont équipés.

Sur un semoir monograine connu, décrit notamment dans le brevet FR 1.208.202, la préhension des graines par les trous d'aspiration du disque du distributeur est facilitée par un brassage effectué par un agitateur dont les pales tournent parallèlement au disque. La sélection est réalisée par des palettes réglables situées décalées de part et d'autre du trajet suivi par les graines transportées par le distributeur, lesdites palettes délimitant un couloir de passage et bousculant radialement les paquets de graines agglomérées sur les trous d'aspiration alternativement en direction du centre du disque et vers sa périphérie. Ce système de sélection ne donne pas entière satisfaction dans la mesure où l'agitateur ne pousse pas les graines en direction du disque mais les entraîne parallèlement à celui-ci et également dans la mesure où les paquets de graines agglomérées sur les trous d'aspiration ne sont bousculés qu'une seule fois dans chaque direction, ce qui dans certains cas peut s'avérer insuffisant.

Sur un autre semoir monograine perfectionné, décrit notamment dans le brevet FR 1.585.445, l'agitation des graines dans le réservoir contigu au disque de transport s'effectue également comme précédemment parallèlement à ce disque, mais les palettes de sélection réglables du semoir précédent ont été remplacées par une plaque sélectrice découpée en dents de scie de manière à former plusieurs rampes inclinées successives dont la pointe se rapproche progressivement de la trajectoire des trous d'aspiration du disque du distributeur. Avec de dispositif, les paquets de graines agglutinées sur les trous d'aspiration sont soumis à une série de chocs successifs qui font tourner les paquets sur eux-mêmes et provoquent la chute des graines en équilibre instable. Bien que donnant satisfaction, on notera qu'avec cette plaque sélectrice, les paquets de grained ne sont repoussés que dans une seule direction radiale, soit vers le centre du disque du distributeur, soit au contraire vers sa périphérie, ce qui peut favoriser certaines graines situées dans une position privilégiée au sein du paquet aggluté sur le trou d'aspiration.

Le brevet français n° 1 410 390 décrit un distributeur monograine pour semoir dans lequel un séparateur de graines doubles comporte une fourchette ayant deux dents tournées vers un disque. Les dents sont disposées de part et d'autre de la file de perforations du disque et délimitent ainsi un couloir pour le passage des graines. Celles-ci ne sont repoussées qu'une fois de chaque côté. Le distributeur ne donne pas satisfaction lorsque les graines sont très plates ou très petites.

Le but de la présente invention est donc de proposer un distributeur pour semoir monograine dans lequel l'approvisionnement en graines du disque perforé de distribution ainsi que l'élimination des graines doubles agglutinées sur un même trou d'aspiration de ce disque sont améliorés.

Le distributeur à dépression pour semoir monograine selon l'invention comporte un disque de distribution rotatif muni d'une file circulaire de perforations, un carter dont l'intérieur est divisé par le disque en deux enceintes contiguës dont l'une sert de réservoir à graines et dont l'autre, qui s'étend sur une partie de la trajectoire des perforations du disque, constitue une chambre à dépression, un dispositif d'élimination de graines doubles appliqué contre le disque et s'étendant le long du trajet des perforations et au-dessus du réservoir à graines, tout en étant ajustable par articulation à une de ses extrêmités sur le carter autour d'un axe perpendiculaire du disque de distribution, et un agitateur placé dans le réservoir à graines à proximité du disque, le dispositif d'élimination se composant essentiellement de deux plaques sélectrices accolées articulées à une de leurs extrêmités sur le carter autour de l'axe perpendiculaire au disque de distribution, et un dispositif de maintien des plaques sélectrices, et disposées de manière que celles-ci aient un bord longeant la trajectoire des perforations du disque de distribution, chacun desdits bords des plaques sélectrices étant muni d'une série de saillies successives s'étendant radialement en direction desdites perforations, lesdites saillies d'une plaque étant situées d'un côté de ladite trajectoire tandis que les saillies de l'autre plaque sont situées du côté opposé de ladite trajectoire et sont disposées en face des intervalles entre les saillies de la première plaque.

De préférence, les plaques sélectrices sont articulées autour d'un axe commun fixé sur le carter à proximité de la périphérie du disque de distribution et perpendiculairement à celui-ci, lesdites plaques s'étendant à partir de leur axe d'articulation en sens inverse du sens de rotation du disque.

De préférence, le distributeur selon l'invention comporte des moyens de réglage du positionnement angulaire réciproque des deux plaques sélectrices, lesdits moyens de réglage étant essentiellement constituées par un levier articulé sur le carter et muni de cames excentrées situées de part et d'autre de l'axe d'articulation dudit levier, lesdites cames étant engagées dans des évidements correspondants ménagés en bout des plaques dans leurs extrémités opposées à leurs articulations sur le carter.

L'amélioration de la précision de la sélection des graines passant également par une amélioration de la prise desdites graines par les trous d'aspiration lorsque ceux-ci passent dans le réservoir, l'invention prévoit également d'orienter l'axe de rotation de l'agitateur parallélement au plan du disque de distribution de telle sorte que la rotation de l'agitateur déplace les graines en direction du disque. Du fait de cette disposition privilégiée , il est possible, selon l'invention, d'assurer l'entraînement de l'agitateur par le disque de distribution lui-même à l'aide de moyens d'accouplement simples disposées entre eux. De préférence, ces moyens d'accouplement sont constitués soit par un galet en matrière ayant un coefficient de frottement élevé tel que du caoutchouc, ledit galet étant monté sur l'axe de rotation de l'agitateur et roulant sur le disque, sout encore par un pignon solidaire de l'arbre de l'agitateur et une série d'évidements ménagés en file circulaire dans le disque autour de son axe de rotation, tel que les dents du pignon de l'agitateur engrènent aved lesdits évidements.

L'invention va maintenant être décrite plus en détail en se référant à des modes de réalisation particuliers cités à titre d'exemple non limitatif et représentés sur les dessins annexés dans lesquels:

Fig. 1 représente schématiquement en coupe un distributeur de semoir pneumatique selon l'invention.

Fig. 2 est une vue en perspective éclatée du dispositif d'élimination des graines doubles du distributeur de la figure 1.

Fig. 3 est une vue de face de ce même dispositif d'elimination des graines doubles de la figure 2.

Fig. 4 représente une vue de côté du dispositif d'élimination de la figure 3.

Fig. 5 représente une vue partielle de la partie basse du distributeur où se trouve placé l'agitateur selon l'invention, et

Fig. 6 est une coupe du distributeur de la figure 5 au niveau de l'axe de l'agitateur, le long de la ligne VI—VI de cette figure.

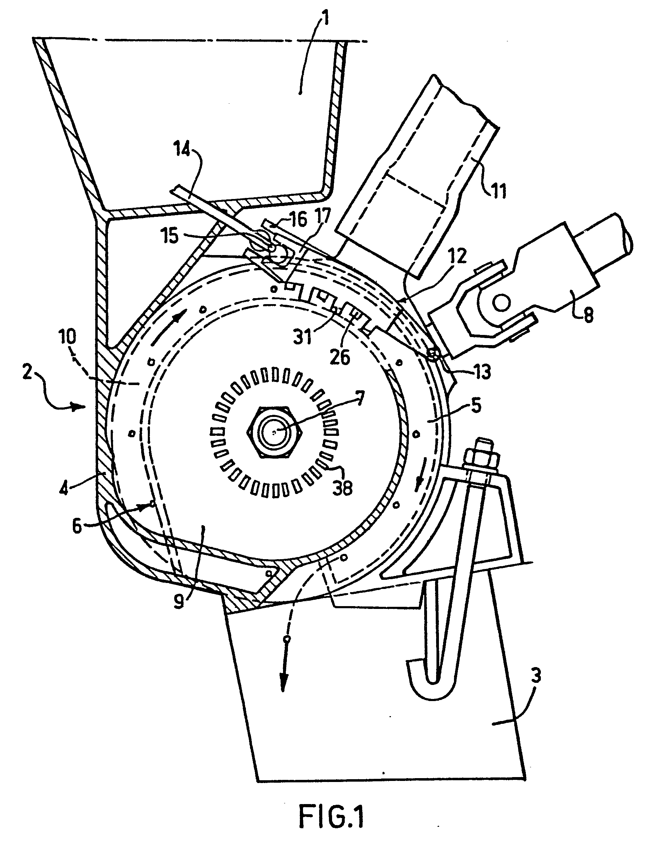

Tel que représenté sur la figure 1, le semoir pneumatique monograine selon l'invention comporte de la manière classique, tel que décrit notamment dans les brevets FR 1.208.202 et 1.585.445 ausquels on se référera pour plus amples détails, une trémie à graines 1 qui surmonte un distributeur à dépression 2 lui-même disposé au-dessus d'un soc 3 inférieur destiné à ouvrir des sillons dans le sol, l'ensemble étant porté un châssis classique non représenté.

Le distributeur 2 se compose de manière connue d'un carter 4 dont l'intérieur est divisé en deux enceintes contiguës par un disque de distribution rotatif 5 muni vers sa périphérie d'une file circulaire de perforations 6 et tournant autour d'un axe central 7 entraîné en rotation par des engrenages non représentés, et un cardan 8 assurant l'accouplement en prise avec une roue du semoir ou tout autre organe assurant une vitesse de rotation proportionnelle à l'avancement du semoir. Une des enceintes ayant pour cloison le disque 5 communique avec une sortie ménagée à la base de la trémie 1 et sert de réservoir à graines 9, tandis que l'autre enceinte 10, ayant également pour cloison latérale le disque 5, est reliée par un tuyau souple 11 à une source d'aspiration non représentée et sert de chambre à dépression, cette dernière enceinte 10 s'étendant circulairement sur une grande partie de la trajectoire des perforations 6 du disque de distribution 5, depuis l'intérieur du réservoir à graines 9 constitué par la première enceinte et jusqu'à la partie basse du distributeur.

A la partie supérieure de ce dernier et de manière connue en soi est disposé un dispositif d'élimination des graines doubles 12 de forme allongée qui est appliqué contre le disque de distribution 5 et s'étend en arc de cercle le long du trajet suivi par les perforations 6 de ce disque. Ce dispositif d'élimination 12 est articulé sur le carter 4 autour d'un axe 13 fixé au voisinage immédiat du pourtour du disque 5 perpendiculairement à celui-ci et un levier de réglage 14 également articulé sur le carter 4 du distributeur autour d'un axe 15 permet de régler la distance entre les bords munis de crans du dispositif 12 et la trajectoire circulaire des trous d'aspiration 6 du disque de distribution.

Lorsque les trous d'aspiration 6 du disque 5 défilent entre le réservoir à graines 9 et la chambre d'aspiration 10 contiguë, ils prélèvent par succion une ou plusieurs graines dans le réservoir 9 et les entraînent hors de celui-ci à la partie supérieure du distributeur où les paquets de graines agglutinées sur les trous d'aspiration rencontrent les crans successifs du dispositif d'elimination 12 qui les bousculent et les font pivoter sur eux-mêmes autour de l'axe du trou d'aspiration et provoquent leur désagrégation. Les graines appartenant à ces paquets et placées en équilibre instable décrochent sous les chocs répétés auxquelles elles sont soumises et tombent à nouveau dans le réservoir 9.

La dernière graine restant sur le trou d'aspiration passant sous le dispositif d'élimination 12 a alors la possibilité de se positionner correctement sur ledit trou où elle est fermement retenue, ce qui lui permet de poursuivre son parcours susqu'à la base du distributeur où la chambre d'aspiration 10 s'interrompt et où les trous 6 du disque traversent une zone dégagée tel que les deux faces opposées du disque 5 sont soumises toutes deux à la pression atmosphérique. L'aspiration des trous 6 étant interrompue, la graine transportée est libérée et tombe entre les lames du soc 3 dans le sillon tracé par celui-ci.

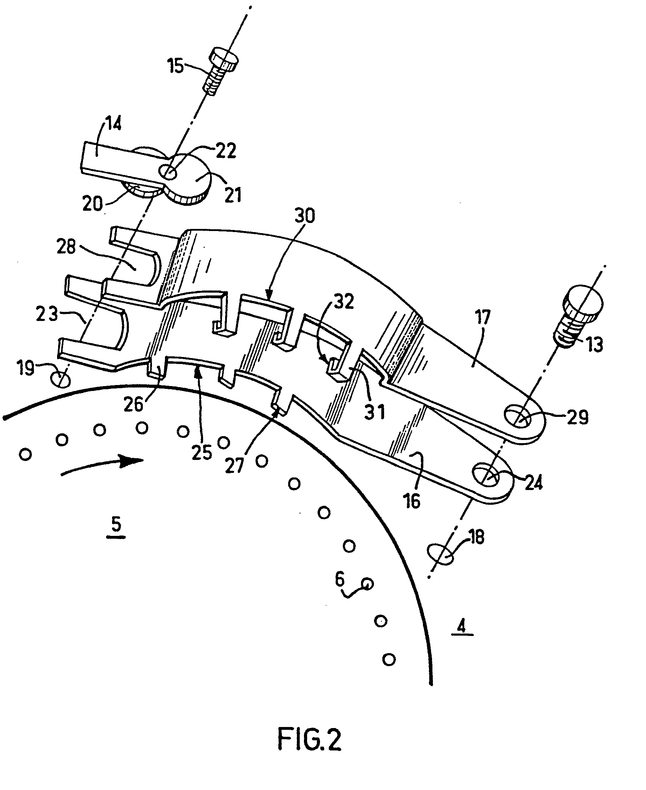

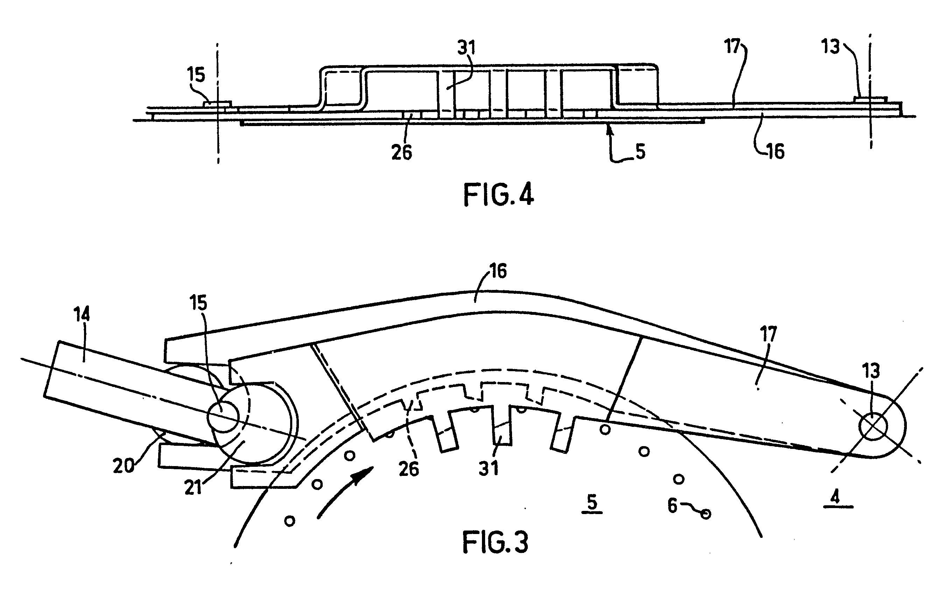

Tel que représenté plus particulièrement sur les figures 2, 3 et 4, le dispositif d'élimination des graines doubles selon l'invention se compose essentiellement de deux plaques sélectrices 16 et 17, d'un axe d'articulation 13 emmanché à force dans un trou 18 percé dans le carter 4 du distributeur à proximité de la périphérie du disque perforé 5, et d'un levier de réglage 14 articulé autour d'un axe 15 emmanché à force dans un trou 19 percé dans le carter 4 à proximité du bord du disque perforé 5, ledit levier 14 étant muni de deux cames 20 et 21 situées de manière excentrée de part et d'autre du trou 22 d'articulation traversé par l'axe 15. Les deux cames 20 et 21 ont la forme de disque circulaire et sont accolées.

La plaque sélectrice 16 est allongée et son extrémité amont par rapport au sens de rotation du disque 5 est en forme de fourche et comporte une échancrure 23 destinée à loger la came 20 du levier 14. L'extrémité aval de la plaque 16 est percée d'un trou d'articulation 24 qui est traversé par l'axe 13. Le bord 25 de la plaque 16 qui est tourné vers le disque de distribution 5 est incurvé selon une courbure sensiblement égale à celle de la trajectoire des trous d'aspiration 6 du disque 5 et il est muni d'ergots en saillie 26 régulièrement espacés s'étendant en direction de ladite trajectoire des trous 6 avec leurs bords 27 faisant face auxdits trous légèrement inclinés obliquement sur la trajectoire de deux-ci.

La seconde plaque distributrice 17 qui est accolée à la plaque 16 a une forme générale similaire à celle-ci et comporte également une extrémité amont en forme de fourche munie d'une échancrure 28 destinée à loger la came 21 du levier 14 et une extrémité aval percée d'un trou d'articulation 29 traversé par l'axe 13. Son bord 30 dirigé vers le disque 5 est également incurvé selon un rayon de courbure voisin de celui de la trajectoire des trous 6 et il est également muni d'ergots 31 régulièrement répartis de manière à s'intercaler entre les ergots 26 de la plaque 16 lorsque les deux plaques sont accolées.

La partie de la plaque 17 comportant le bord 30 muni des ergots 31 est emboutie et décalée par rapport aux deux extrémités de ladite plaque 17, de telle sorte que lorsque les deux plaques 16 et 17 sont accolées, seules les parties d'extrémité de la plaque 17 soient appliquées sur la plaque 16, tandis que les parties centrales munies des ergots restent légèrement écartées l'une de l'autre dans deux plans parallèles.

Une fois montée, la plaque 16 est appliquée contre le disque 5 tel que les trous d'aspiration 6 défilent devant les bords obliques 27 des ergots 26 disposés tous d'un même côté de la trajectoire des trous, par exemple du côté extérieur dans le mode de réalisation représenté. Pour que les ergots 31 de la plaque 17 juxtaposée s'appliquent également sur le disque 5 et pour que leur bord d'extrémité se situe également au voisinage de la trajectoire des trous d'aspiration du disque et du côté de celle-ci opposé à celui des ergots 26 de la plaque 16, lesdits ergots 31 sont recourbés en forme de crochets vers l'intérieur de telle sorte que leur partie d'extrémité 32 se situe sensiblement dans le même plan que les ergots 26 de la plaque 16, autrement dit le plan du disque 5.

Une fois les deux plaques 16 et 17 du dispositif 12 montées, la trajectoire des trous d'aspiration 6 du disque 5 est encadrée par une double série d'ergots 26 et 31 alternativement répartis de part et d'autre de ladite trajectoire. Les deux plaques 16 et 17 étant articulées autour de l'axe 13 planté dans le trou 18 perpendiculairement au plan du disque 5, le réglage de l'angle formé par lesdites plaques permet de rapprocher ou d'écarter simultanément les ergots 26 et 31 de la trajectoire des trous d'aspiration 6. Ce réglage est obtenu au moyen du levier 14 pivotant autour de son axe 15 et agissant sur les plaques 16 et 17 par l'intermédiaire des deux cames 20 et 21 logées dans les échancrures, respectivement 23 et 28, le pivotement dudit levier permettant de faire s'ouvrir ou refermer les deux plaques à la manière de deux mâchoires avec pour effet d'élargir ou de rétrécir le passage en forme de coin entre les rangées opposées d'ergots 26 et 31. A noter que le passage est en forme d'entonnoir et tend à se rétrécir dans le sens de rotation du disque 5 de telle sorte que la sélection des grainues est de plus en plus sévère à mesure que les paquets de traines agglutinées sur les trous 6 s'avancent entres lesdites rangées opposées d'ergots alternés.

Le fonctionnement du dispositif de sélection selon l'invention se comprend aisément.

Les agglomérats de graines agglutinés sur les trous d'aspiration 6 du disque 5 sont heurtés successivement et alternativement d'une part par les bords 27 des ergots 26 qui repoussent lesdits agglomérats vers le centre du disque et les font tourner dans le sens des aiguilles d'une montre et d'autre part par les extrémités 32 des ergots opposés 31 qui, contrairement, repoussent lesdits agglomérats vers l'exterieur et la périphérie du disque et les font tourner dans le sens anti-horaire. Les paquets de graines ainsi chahutés et bousculés alternativement dans un sens puis dans l'autre perdentsuccessivement leurs graines en équilibre instable pour ne conserver à la sortie du dispositif d'élimination 12 qu'une seule et unique graine dont la position privilégiée au centre du trou d'aspiration a permis de subir les chocs répétés du dispositif sand être éjectée. En fonctionnement, l'angle formé par les deux plaques 16 et 17 reste constant et le levier 14 est bloqué. Par contre, en cas de changement de type et de grosseur de graine, il est possible de faire varier cet angle des deux plaques par pivotement du levier 14 autour de son axe 15.

Pour améliorer encore la sélection des graines et éliminer les doubles par trou d'aspiration, il est également prévu selon l'invention de bien positionner les graines sur les trous dès la prise dans la boîte à graines car, lorsqu'une graine est parfaitement positionnée sur son trou de succion, elle le masque pratiquement totalement et, de ce fait ne permet pas l'aspiration d'une seconde graine, ce qui est évite ainsi d'avoir à éliminer ultérieurement cette dernière.

En conséquence, pour améliorer la prise il est également prévu selon l'invention d'améliorer l'agitation des graines dans le réservoir à graines, notamment en poussant celles-ci en direction du disque de distribution à l'aide d'un agitateur tournant autour d'un axe sensiblement parallèle au plan du disque.

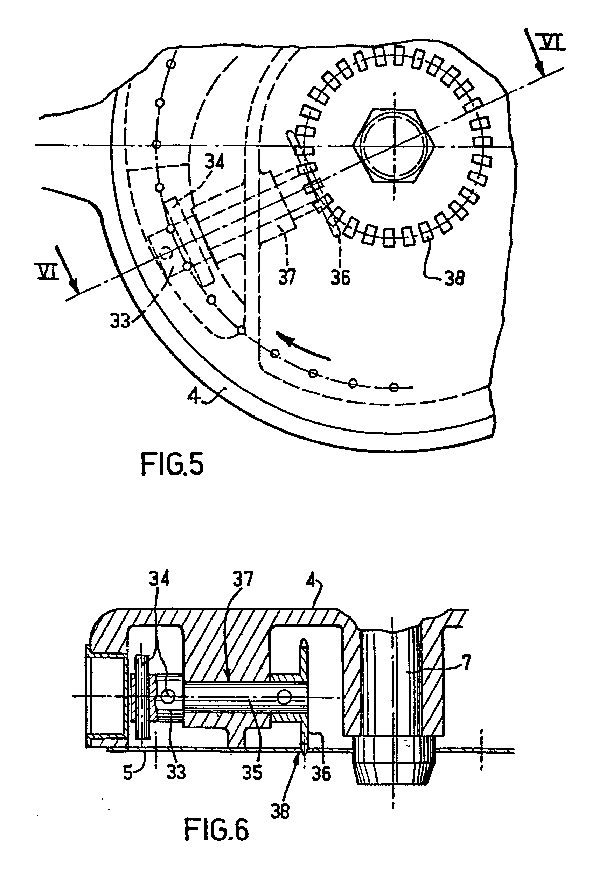

Tel que représenté sur les figures 5 et 6 le distributeur selon l'invention comporte, disposé à l'intérieur et à la partie basse de la boîte à graines du carter 4, un agitateur 33 muni de palettes de brassage 34 et monté à l'extrémité d'un axe 35 muni à son autre extrémité d'un pignon denté 36. L'axe 35 est monté tournant parallèlement au plan du disque 5 de distribution dans un palier lisse 37 porté par la paroi du carter 4 du distributeur. Pour assurer l'entraînement en rotation de l'agitateur 33, il est prévu sur le disque de distribution 5 une rangée circulaire d'évidements 38 (voir figure 5) régulièrement répartis tout autour de l'axe central 7 du disque, les dents du pignon 36 claveté sur l'arbre 35 de l'agitateur engrenant dans lesdits évidements 38 de telle sorte que la rotation du disque 5 entraîne simultanément la rotation de l'agitateur 33 dont les pales 34 sont situées au niveau des trous d'aspiration 6 et repoussent les graines en direction de ceux-ci.

On notera que la disposition particulière de l'agitateur selon l'invention, à savoir tournant autour d'un axe parallèle au plan du disque, permet d'assurer l'entraînement dudit agitateur à l'aide du disque lui-même et supprime toute pignonnerie de renvoi.

En variante, le pignon 36 claveté sur l'arbre 35 de l'agitateur ainsi que les évidements 38 ménagés dans le disque de distribution peuvent être remplacés par un simple galet en matière à coefficient de frottement élevé, telle que du caoutchouc, claveté sur l'arbre 35 de l'agitateur 33 et appliqué sur la face du disque 5 de manière à assurer la transmission des mouvements par contact de frottement.

Bien entendu, la portée de l'invention n'est pas limitée au seul mode de réalisation décrit ci-dessus à titre d'exemple non limitatif mais elle couvre également toute variante qui ne différerait que par des détails.

C'est ainsi notamment que les deux plaques sélectrices 16 et 17 peuventêtre utilisées pour assurer la sélection des graines non pas le long d'une seule file circulaire de trous d'aspiration, mais le long de deux files concentriques distinctes, chaque plaque sélectrice étant associée à une file particulière tandis que le réglage de la sélection est unique et réalisé à l'aide d'un seul levier de réglage. Dans ce cas, pour éviter que le surplus de graines éliminé de la rangée de trous d'aspiration extérieure tombe sur la rangée de trous intérieure et soit réaspiré dans possibilité ultérieure d'élimination, le dernier ergot actif dans le sens de rotation du disque doit appartenir à la plaque sélectrice associée à la file intérieure de trous.

## Revendications

1. Distributeur à dépression pour semoir monograine comportant un disque (5) de distribution rotatif muni d'une file circulaire de perforations (6), un carter (4) dont l'intérieur est divisé par le disque en deux enceintes contiguës dont l'une (9) sert de réservoir à graines et dont l'autre (10), s'étendant sur une partie de la trajectoire des perforations du disque, constitue une chambre à dépression, un dispositif (12) d'élimination des graines doubles appliqué contre le disque, et s'étendant de long du trajet des perforations et au-dessus du réservoir à graines (9), tout en étant ajustable par articulation à une de ses extrémités sur le carter autour d'un axe (13) perpendiculaire au disque de distribution, et un agitateur (33) placé dans le réservoir à graines à proximité du disque, caractérisé en ce que le dispositif (12) d'élimination comprend essentiellement deux plaque sélectrices (16, 17) accolées articulées à une de leurs extrêmités sur le carter autour de l'axe (13) perpendiculaire au disque de distribution, et un dispositif (14) de maintien de plaques sélectrices de manière que celles-ci aient un bord (25, 30) longeant la trajectoire des perforations (6) de ce disque, en ce que chacun desdits bords des plaques sélectrices est muni d'une série de saillies successives (26, 31) s'étendant radialement en direction desdites perforations, et en ce que les saillies (26) d'une plaque (16) sont situées d'un côté de ladite trajectoire tandis que les saillies (31) de l'autre plaque (17) sont situées du côté opposé de ladite trajectoire et sont disposées en face des intervalles entre les saillies (26) de la première plaque (16).

2. Distributeur selon la revendication 1, caractérisé en ce que lesdites plaques sélectrices (16, 17) s'étendent, à partir de leur axe d'articulation (13), en sens inverse du sens de rotation du disque (5) et sont agencées et disposées l'une par rapport à l'autre de telle sorte que les deux rangées de saillies (26, 31) en regard des bords desdites plaques (16, 17) définissent un passage en forme d'entonnoir allante en se rétrécissant dans le sens de rotation du disque.

3. Distributeur selon l'une des revendications 1 et 2, caractérisé en ce que le dispositif de maintien comporte des moyens (14, 20, 21) de réglage du positionnement angulaire réciproque des deux plaques sélectrices (16, 17).

4. Distributeur selon la revendication 3, caractérisé en ce que lesdits moyens de réglage sont essentiellement constitués par un levier (14) articulé sur le carter (4) et muni de cames (20, 21) excentrées de part et d'autre de l'axe (15) d'articulation dudit levier, lesdites cames (20, 21) étant engagées dans des évidements correspondants (23, 28) ménagés en bout des plaques, dans leurs extrémités opposées à leurs articulations sur le carter (4).

5. Distributeur selon la revendication 1, caractérisé en ce que l'agitateur (33) disposé dans le réservoir (9) tourne autour d'un axe (35) sensiblement perpendiculaire à l'axe de rotation du disque de distribution (5) et en ce que des moyens (26, 38) d'accouplement en rotation sont prévus entre le disque et l'agitateur.

6. Distributeur selon la revendication 5, caractérisé en ce que lesdits moyens d'accouplement sont constitués par un pignon (36) solidaire de l'arbre (35) de l'agitateur (33) et par une file circulaire d'évidements successifs (38) ménagés dans le disque (5) autour de son axe de rotation, les dents du pignon de l'agitateur engrenant dans les évidements du disque.

7. Distributeur selon la revendication 5, caractérisé en ce que les moyens d'accouplement sont constitués par un galet en matière à coefficient de frottement élevé monté sur l'axe de l'agitateur et roulant sur le disque.

**Patentansprüche**

1. Unterdruckverteiler für eine Einzelkornsämaschine mit einer umlaufenden, mit einer kreisförmigen Reihe von Öffnungen (6) versehenen Verteilerscheibe (5), mit einem Gehäuse (4), dessen Innenraum von der Scheibe in zwei aneinander anschließende Räume unterteilt ist, von denen der eine (9) als Kornvorratskammer dient und der andere (10), der sich über einen Teilabschnitt des von den Öffnungen in der Scheibe durchlaufenen Wegs erstreckt, eine Unterdruckkammer bildet, mit einer zum Ausscheiden von Doppelkornbelegungen dienenden Einrichtung (12), die sich an die Scheibe anlegt, sich längs des Wegs der Öffnungen und über der Kornvorratskammer (9) erstreckt, während sie durch Anlenkung an einem ihrer Ende an dem Gehäuse um eine Achse (13) senkrecht zur Verteilerscheibe einstellbar ist, und mit einem Rührwerk (33), das in dem Kornvorratsraum nahe der Scheibe angeordnet ist, dadurch gekennzeichnet, daß die Einrichtung (12) zum Ausscheiden im wesentlichen zwei zusammengefügte Selektierplatten (16, 17), die an einem ihrer Enden gelenkig um die zur Verteilerscheibe senkrechte Achse (13) schwenkbar an dem Gehäuse angeordnet sind, und eine Einrichtung (14) zum Halten der Selektierplatten derart umfaßt, daß letztere ein Kante (25, 30) aufweisen, die sich längs des Weges der Öffnungen (6) der Scheibe erstrecken, daß jede dieser Kanten der Selektierplatten mit einer Reihe von aufeinanderfolgenden Vorsprüngen (26, 31) versehen ist, die sich radial in Richtung der Öffnungen erstrecken, und daß die Vorsprünge (26) der einen Platte (16) sich auf der einen Seite des Weges befinden, während die Vorsprünge (31) der anderen Platte (17) sich auf der anderen Seite des Weges befinden und gegenüber von Zwischenräumen zwischen den Vorsprüngen (26) der ersten Platte (16) angeordnet sind.

2. Verteiler nach Anspruch 1, dadurch gekennzeichnet, daß die Selektierplatten (16, 17 ) sich von ihrer Schwenkachse (13) ausgehend entgegen der Umlaufrichtung der Scheibe (5) erstrecken und derart ausgebildet und relativ zueinander angeordnet sind, daß die beiden Reihen von Vorsprüngen (26, 31) an den Kanten der Platten (16, 17) einen Durchlaß in Form eines sich in Umlaufrichtung der Scheibe verengenden Trichters definieren.

3. Verteiler nach einem der Ansprüche 1 und 2, dadurch gekennzeichnet, daß die Einrichtung zum Halten Mittel (14, 20, 21) zum Regulieren der reziproken Winkelstellung der beiden Selektierplatten (16, 17) aufweist.

4. Verteiler nach Anspruch 3, dadurch gekennzeichnet, daß die Mittel zum Regulieren im wesentlichen von einem an dem Gehäuse (4) schwenkbeweglich angelenkten und mit beidseits der Hebelschwenkachse (15) exzentrisch angeordneten Nocken (20, 21) versehenen Hebel (14) gebildet werden, welche Nocken (20, 21) auf entsprechenden, in das dem am Gehäuse (4) gelagerten Plattenende entgegengesetzte Ende der Platten eingearbeitete Ausnehmungen (23, 28) in Eingriff stehen.

5. Verteiler nach Anspruch 1 dadurch gekennzeichnet, daß sich das in der Vorratskammer (9) angeordnete Rührwerk (33) um eine im wesentlichen senkrecht zur Umlaufachse der Verteilerscheibe (5) verlaufende Achse (35) dreht und daß zwischen der Scheibe und dem Rührwerk Kupplungsmittel (36, 38) zur Übertragung der Drehbewegung vorgesehen sind.

6. Verteiler nach Anspruch 5, dadurch gekennzeichnet, daß die Kupplungsmittel von einem mit der Welle (35) des Rührwerks (33) fest verbundenen Ritzel (36) und einer kreisförmigen Reihe von aufeinanderfolgenden in die Scheibe (5) rings um deren Drehachse eingearbeiteten Ausnehmungen (38) gebildet werden, wobei die Zähne des Ritzels des Rührwerkes mit den Ausnehmungen der Scheibe kämmen.

7. Verteiler nach Anspruch 5, dadurch gekennzeichnet, daß die Kupplungsmittel aus einem Reibrad aus einem Material mit hohem Reibungskoeffizienten bestehen, das auf der Welle des Rührwerks montiert ist und auf der Scheibe rollt.

**0 046 709**

## Claims

1. Partial-vacuum distributor for a single-seed drill comprising a rotary distribution disc (5) provided with a circular row of perforations (6), a housing (4) whose interior is divided by the disc into two adjoining enclosures, one (9) of which serves as a seed tank and the other (10) of which, extending over a part of the trajectory of the disc perforations, forms a partial-vacuum chamber, a device (12) for removing double seeds which is applied against the disc, and extends along the path of the perforations and above the seed tank (9), while being adjustable by articulation at one of its ends on the housing around an axis (13) perpendicular to the distribution disc, and an agitator (33) placed in the seed tank close to the disc, characterised in that the removal device (12) comprises essentially two selector plates (16, 17) coupled side by side and articulated at one of their ends on the housing around the axis (13) perpendicular to the distribution disc, and a device (14) for holding the selector plates so that they have an edge (25, 30) running along the trajectory of the perforations (6) of this disc, in that each of the said edges of the selector plates is provided with a series of successive projections (26, 31) extending radially in the direction of the said perforations, and in that the projections (26) of a plate (16) are situated on one sode of the said trajectory while the projections (31) of the other plate (17) are situated on the opposite side of the said trajectory and are arranged opposite the spaces between the projections (26) of the first plate (16).

2. Distributor according to claim 1, characterised in that the said selector plates (16, 17) extend, starting at their axis of articulation (13), in a direction opposite to the direction of rotation of the disc (5) and are provided and arranged relative to each other so that the two rows of projections (26, 31) facing the edges of the said plates (16, 17) define a funnel-shaped passage narrowing in the direction of rotation of the disc.

3. Distributor according to either of claims 1 and 2, characterised in that the holding device comprises means (14, 20, 21) for regulating the mutual angular positioning of both selector plates (16, 17).

4. Distributor according to claim 3, characterised in that the said means of regulation consist essentially of a lever (14) articulated on the housing (4) and provided with cams (20, 21) which are excentric on either side of the axis (15) of articulation of the said lever, the said cams (20, 21) engaging in corresponding recesses (23, 28) provided in the end of the plates, in their ends which are opposite to their articulations on the housing (4).

5. Distributor according to claim 1, characterised in that the agitator (33) arranged in the tank (9) rotates around an axis (35) substantially perpendicular to the axis of rotation of the distribution disc (5) and in that the means (36, 38) for coupling in rotation are provided between the disc and the agitator.

6. Distributor according to claim 5, characterised in that the said means for coupling consist of a pinion (36) joined integrally to the shaft (35) of the agitator (33) and of a circular row of successive hollows (38) provided in the disc (5) around its axis of rotation, the teeth of the agitator pinion meshing with the hollows of the disc.

7. Distributor according to Claim 5, characterised in that the means of coupling consist of a roller, made of a material having a high coefficient of friction, mounted on the axle of the agitator and rolling over the disc.

FIG.1

FIG.2

FIG.4

FIG.3

0 046 709

FIG.5

FIG.6